# EUROPEAN PATENT SPECIFICATION

(11) **EP 1 675 015 B1**
(45) Date of publication and mention of the grant of the patent: **30.04.2008**
(21) Application number: 04425935.6
(22) Date of filing: 22.12.2004
(51) Int. Cl.: G06F 15/80, G06F 15/177

(54) **Reconfigurable multiprocessor system particularly for digital processing of radar images**
Rekonfigurierbares Mehrprozessorsystem besonders zur digitalen Verarbeitung von Radarbildern
Système multiprocesseur reconfigurable notamment pour le traitement numérique des images de radar

(43) Date of publication of application: 28.06.2006
(73) Proprietor: Galileo Avionica S.p.A., 50013 Campi Bisenzio (Firenze) (IT)
(72) Inventor: Piacentini, Maurizio, 22069 Rovellasca (IT); Lombardi, Michele, 20157 Milano (IT); Vitale, Gregorio, 20094 Corsico (IT)
(74) Representative: Modiano, Micaela Nadia

(56) References cited:
- US-A- 5 014 189
- US-A- 5 296 936
- US-A1- 2001 054 124
- NICOLE D A ED - BRITISH COMPUTER SOCIETY PARALLEL PROCESSING SPECIALIST GROUP: "ESPRIT PROJECT 1085 RECONFIGURABLE TRANSPUTER PROCESSOR ARCHITECTURE" ADDITIONAL CONFERENCE PAPERS. MANCHESTER, SEPT. 12 - 16, 1988, PROCEEDINGS OF CONPAR, LONDON, BCS, GB, 12 September 1988 (1988-09-12), pages 12-39, XP000135652

## Description

The present invention relates to a reconfigurable multiprocessor architecture that is particularly suitable for, but not limited to, the digital processing of radar signals. The invention is in fact particularly suitable for all applications in which it is necessary to process a large amount of data and in which the algorithms to be run for processing can be divided into a cascade of specific functions.

In the field of multiprocessor architectures, structures of the fully-connected type are known in which N processors or CPUs (Central Processing Units) are mutually connected by means of a matrix of NxN connection elements, so that all the processors can communicate with each other by means of a direct connection.

When the computational power requirement is high and at the same time the space and power resources are limited, the direct-connection architecture is disadvantageous, since the size of the switching matrix increases very rapidly as the number of processors increases, and the overall size and the management of the entire processing system become prohibitive, especially in an application environment such as for example avionics.

One known alternative solution consists in using a shared memory, in which a plurality of processors can read and write processing data. The constructive complexity of this architecture is reduced with respect to the fully-connected solution, but the presence of shared memory is a critical bottleneck for memory access even with a low number of processors.

Another known type of architecture is based on a telephone-type connection, in which all the nodes can talk to each other via shared connections. All the computing elements are connected to a hierarchically organized switching matrix. Multiple computing elements are connected to a same connection element, and each connection element is connected to another connection element of a higher level, to which multiple connection elements are connected, so as to form a hierarchical structure of connection elements at the vertex of which the data input/output (I/O) devices are interfaced.

D1, US-A-5014189 discloses a processor array, wherein the processors are connected selectively in series or parallel. The processor array comprises further an input and output bus with at least one processor interposed. Controlling means are provided to control the switching devices in order to connect the first to the N-th processor together selectively.

D2, US 2001/054124 discloses a parallel processor system, comprising a pair of parallel buses, pipeline buses, and a plurality of processor nodes, which have functions of carrying out an operation process in response to an instruction and transferring data. Further the system includes a switch controller, which is controlling the connection mode of cluster switches and coupling the processor nodes in series and/or in parallel.

A hierarchical connection is effective if the number of communications in progress is very small with respect to the number of processors. The greater the distance between a processor and the I/O devices, the higher the level of connection involved, and therefore signal propagation times are relatively long and difficult to predict. This solution becomes problematic in real-time applications, such as for example the processing of data acquired by a radar to be shown on a display.

Moreover, if the data flow is very intense and/or many processors request the connection, the connection elements at the highest hierarchical level become saturated and the system may fail. Since communication requests cannot be predicted precisely, as they depend on the data and on their processing, connection attempts are random and failures can occur erratically, with limited possibilities of control and prevention.

One might therefore think to use a structure that has preset connections among the various computing elements, but this solution would completely lack flexibility and would in practice prevent the addition of new elements, since such an addition would entail a complete restructuring of the communications network.

### Summary of the invention

The aim of the present invention is to overcome the drawbacks cited above by devising a multiprocessor architecture that is flexible and allows to process large amounts of data efficiently.

Within this aim, a particular object of the invention is to be able to vary the computing power of the system depending on the particular application of interest, using the chosen number of computing elements and configuring their mutual connection without saturating the connection elements or the memories of the system.

Another object of the invention is to spread the computing power over multiple processors even while the system is in operation, by acting exclusively via the operating software.

Another object is to provide a reconfigurable architecture that is independent of the particular type of computing element or of the particular hardware implementation of the functional blocks and is independent of the components used to provide the communications system.

Another object is to relieve the processing elements from data traffic management and to analyze said data externally in a non-intrusive way.

Another object is to provide an architecture that is modular, economically advantageous and simple to implement.

This aim and these and other objects that will become better apparent hereinafter are achieved by the multiprocessor system for allocating data processing resources according to claim 1.

Further characteristics and advantages of the present invention will become better apparent from the description of a preferred but not exclusive embodiment of the invention, illustrated by way of non-limiting example in the accompanying figures, wherein:
Figure 1 is a generic block diagram of an embodiment of the invention;
Figures 2a and 2b are schematic diagrams of the two connection configurations of the data communication buses inside a node of the architecture according to the invention;
Figures 3a and 3b are respectively a schematic diagram of the resource allocation to be provided and of the architectural configuration for providing it;
Figure 4 is a detailed diagram of the connections of the video channels inside a node of the architecture according to the invention;
Figure 5 is a detailed diagram of the connections of the network channel inside a node of the architecture according to the invention;
Figure 6 is a block diagram of a particular cascade of functions provided with the architecture according to the invention.

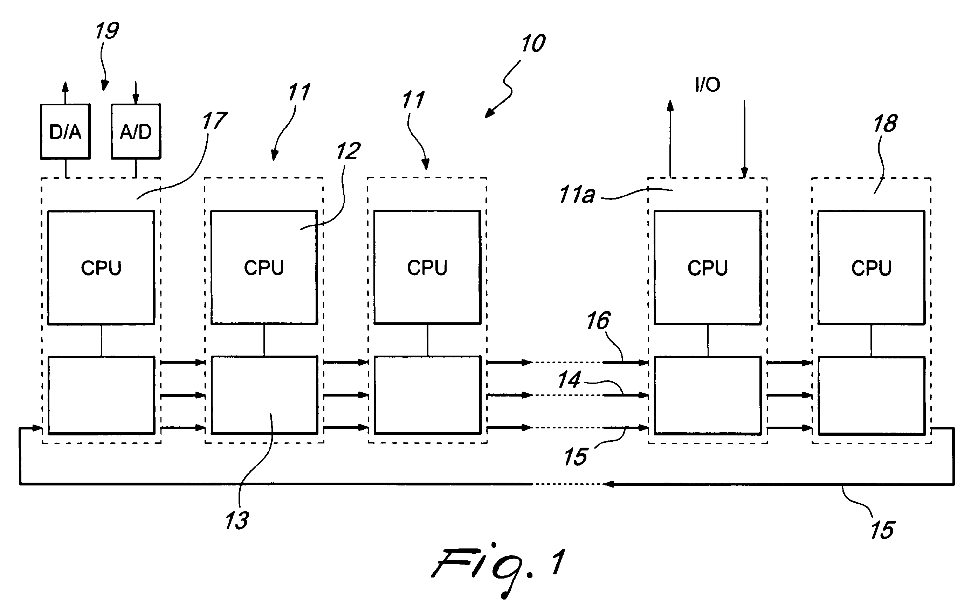

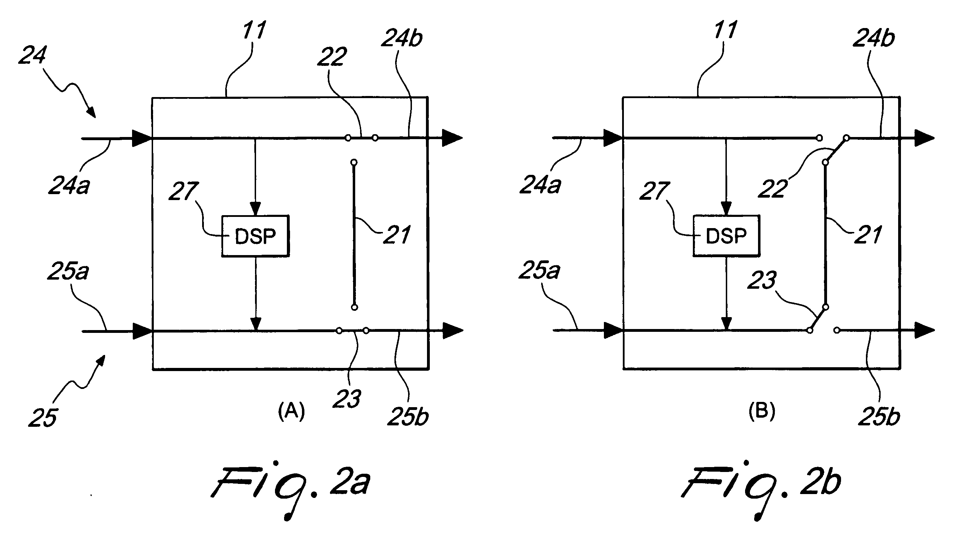

With reference to Figures 1 and 2, the architecture 10 according to a preferred embodiment of the invention comprises a series of processing or computing nodes 11, which are mutually connected by means of a data communications bus 14, which in turn is composed of an input bus 24 and an output bus 25, which are mutually independent.

The architecture of Figure 1 is preferably implemented on a motherboard in which each node has a physical address (slot address) determined by appropriate pins on the board and has a subaddress that identifies it within the board if said board clusters multiple nodes. It is optionally possible to associate a logical address with each node via software. The communications network is composed of independent channels provided with a standard interface.

Each node comprises a processing unit 12 (designated by CPU in the figures) for processing and exchanging data with other nodes via the communications bus 14 and a node controller 13, which is connected to the processing unit 12 and receives and sends commands from and toward the processing unit 12 in order to manage mainly communications with the other nodes and access to the communications buses. In the preferred embodiment of the invention, the processing units 12 comprise a digital signal processor or DSP 27 and the data communicated via the communications buses 14 are video data. For this reason, the communications buses 14 are also referenced hereinafter as "video buses".

Actually, a processing unit according to the present invention may be any element capable of performing a certain function, for example an interface for transferring data out of the network or inside it, a video display unit that shows images or symbols to an operator, A/D or D/A converters (already shown in Figure 1), and so forth.

Data transfers are controlled by FPGA dedicated programmable components, by means of which the node controllers and the switches are physically implemented.

A particular node 17 optionally comprises analog-digital (A/D) converters 19 or digital-analog (D/A) converters 19 for accessing analog sources or receivers, such as for example a radar antenna, which is not shown. Optionally, another node 11a of the network can be provided with standard input/output (I/O) interfaces.

Finally, the architecture 10 comprises a particular resource allocation node 18 for overall network management, which is used mainly to update the operating software, to distribute commands to the various nodes and to configure the network. The node 18 uses a particular communications bus, which is termed hereinafter"network bus" 15 and which connects in a loop all the processing nodes of the system.

The architecture is preferably completed by an additional bus 16, termed herein "auxiliary bus", which connects all the processing nodes and is independent of the other communications buses. As described hereinafter, the auxiliary bus 16 is used for nonintrusive acquisition of data flowing on the video bus and acquired from any node of the network.

In order to reduce the number of pins of the connectors and any crosstalk phenomena, the hardware implementation of the buses 14-16 is based on serial connections.

Figures 2a and 2b schematically illustrate the solution idea that characterizes the present invention. The input bus 24 and the output bus 25 access internally each processing node 11, respectively via the inputs 24a and 25a, and exit from the node respectively via the outputs 24b and 25b.

The DSP 27 of the node 11 is connected in input to the input bus 24 and, more particularly, to the portion 24a of the bus 24, so that the data present on the portion 24a constitute the data to be processed by the DSP. Moreover, the DSP is connected in output to the video bus 25, so as to send over said video bus the data generated by the processing performed by the DSP 27, adding them to any data already present on the bus 25a.

The node 11 is characterized in that it comprises switching means, which are associated with the input and output buses 24 and 25 for switching the output bus on the input bus depending on the particular function to be provided. In particular, each node 11 preferably comprises a crossing line 21 and two switches 22 and 23, which are respectively connected to the bus 24 and to the bus 25 and are provided so as to switch from a "parallel" state, in which the input 24a is connected to the output 24b of the video bus 24 and in which the input 25a is connected to the output 25b of the video bus 25, to a series state, in which the output 24b is disconnected from the input 24a and is connected to the crossing line 21 and in which the input 25a is disconnected from the output 25b and is connected to the same crossing line 21.

By acting simultaneously on the switches 22 and 23, it is possible to switch the output bus 25 on the input bus 24 so that the data that are present on the output bus of the node 11 and the data processed by the DSP 27 are transmitted on the output 24b and therefore presented in input to the successive node. As will become better apparent hereinafter, if the switches are set to the "series" state, the DSP core of the node that follows the node 11 being considered (also referenced as "local node") receives in input the results generated by the DSP core 27 of the local node 11 and by the other nodes upstream of the node 11 that belong to the same function.

When instead the switches are set to the "parallel" state, the data packets received respectively on the inputs 24a and 25a are repeated on the two outputs 24b and 25b, while the data that correspond to the results of the local processing performed by the DSP 27 are also transmitted on the output 25b. The DSP core of the node that follows the node 11 therefore receives in input the same data received by the local DSP core and the results of the successive node can also be routed on the same channel of the local node 11. Accordingly, the two nodes are connected in parallel.

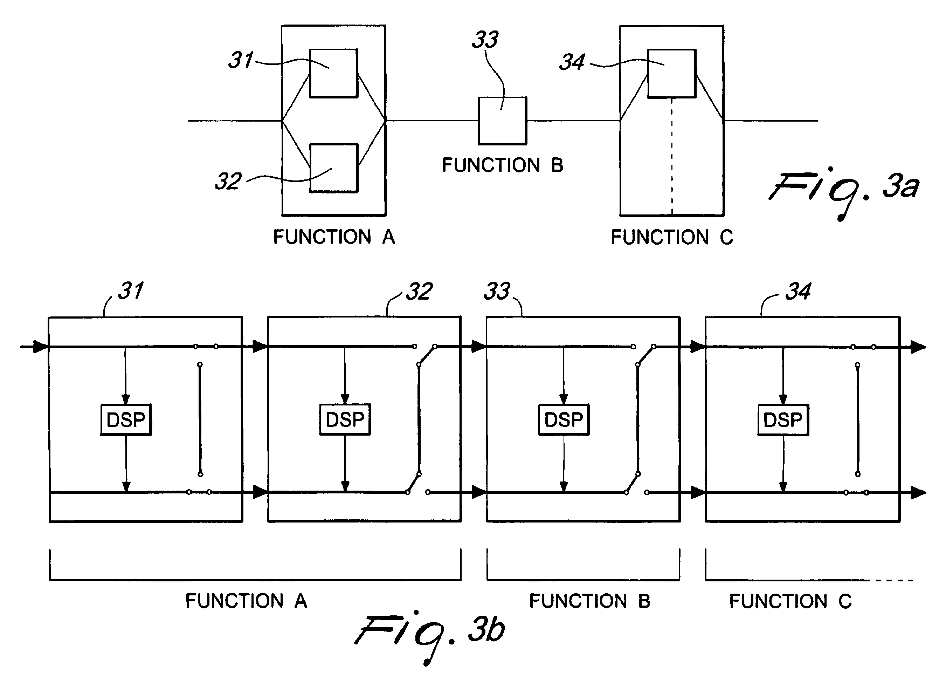

By acting on the switches it is therefore possible to redistribute the computing elements among the various functions to be provided while keeping unchanged the physical connections among the various nodes. This is particularly evident from the physical implementation of the function shown in Figure 3a, which is composed of three functions A, B and C arranged in a cascade configuration. Two computing nodes 31 and 32 are allocated for the function A, a single node 33 is allocated for the function B, and five nodes are allocated for the function C, only the first node 34 being shown.

Figure 3b illustrates the circuit implementation of the function of Figure 3a in the architecture according to the invention. The nodes 31 and 32 of the function A are connected in parallel by arranging the switches of the node 31 in the parallel state. The cascade connection between the function A and the function B and between the function B and the function C is instead provided by selecting the series state for the switches of the nodes 32 and 33 respectively. Finally, the nodes of the function C comprise their respective switches in the parallel state. The results of the operation performed by the function shown in Figure 3a are presented on the output channel of the last node of the function C.

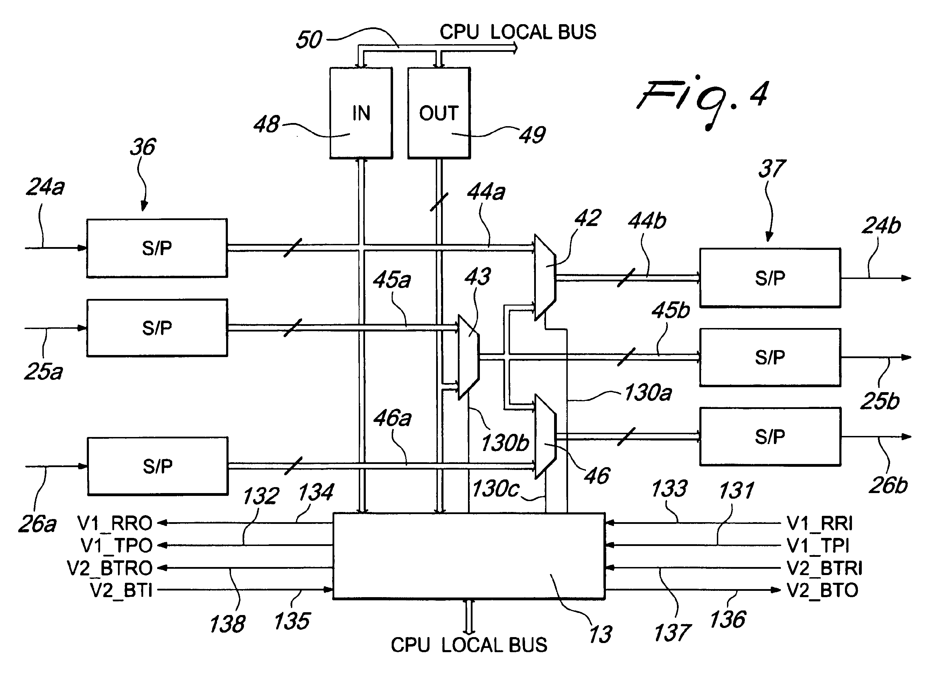

Figure 4 illustrates an example of embodiment of a node of the architecture according to the present invention. The video buses 24a and 25a and an auxiliary bus 26a, which are provided in input to the node 11, are connected to respective series/parallel (S/P) converters 36 in order to convert the serial information contained in the channels 24a, 25a and 26a into 32-bit parallel information on respective channels 44a, 45a and 46a.

The processing unit (not shown in Figure 4) is connected to the parallel channel 44a via a local bus 50 and an input buffer memory 48. The channel 44a is further connected to the node controller 13 and to a first multiplexer 42 with 64 inputs, which comprises a 32-bit output 44b which, by means of a parallel/series converter, converges in the portion 24b of the input video bus.

The parallel channel 45a is connected in input to a second multiplexer 43 with 64 inputs, which also has in input the parallel output 49a (of the 32-bit type) of a buffer memory 49, which is connected to the processing unit and can also be accessed by the node controller 13.

The output 45b of the multiplexer 43 is connected both to the portion 25b of the output bus 25 by means of a respective parallel/series (P/S) converter 37 and to respective inputs of the multiplexer 42 and of an auxiliary multiplexer 46. The auxiliary multiplexer 46 further comprises in input the auxiliary channel 46a and is connected in output to a respective parallel/series converter for converging the parallel information on the serial auxiliary channel 26b.

The multiplexers 42, 43 and 46 comprise respective selectors 130a, 130b, 130c, which are connected to the node controller 13 in order to select which of the two 32-bit inputs of each multiplexer must be carried integrally on the respective output.

As can be noted, the multiplexer 42 implements the function of the switches 22 and 23, since depending on the inputs selected by means of the selector 130a it is possible to switch onto the channel 24b the information received from the channels 44a and 45b.

The multiplexer 43 is instead controlled so as to repeat on the channel 45b the data received from the bus 25a and to transmit the processed data acquired from the output buffer 49.

Finally, the multiplexer 46 is controlled by the node controller 13 so as to repeat on the auxiliary output 26b the information that is present on the output of the multiplexer 43 and accordingly allows to acquire locally the processing data in output from the individual node, routing them on an independent auxiliary channel (which corresponds to the auxiliary bus 16 shown in Figure 1).

As mentioned earlier, the architecture according to a preferred embodiment of the invention comprises a network or configuration bus 15, which connects in a loop all the nodes of the system and allows each node to exchange data with any other node. The channel associated with the bus 15 can also be used to update the operating software of the system, but the bus is configured so that any malfunction of the software does not cause failure of the channel.

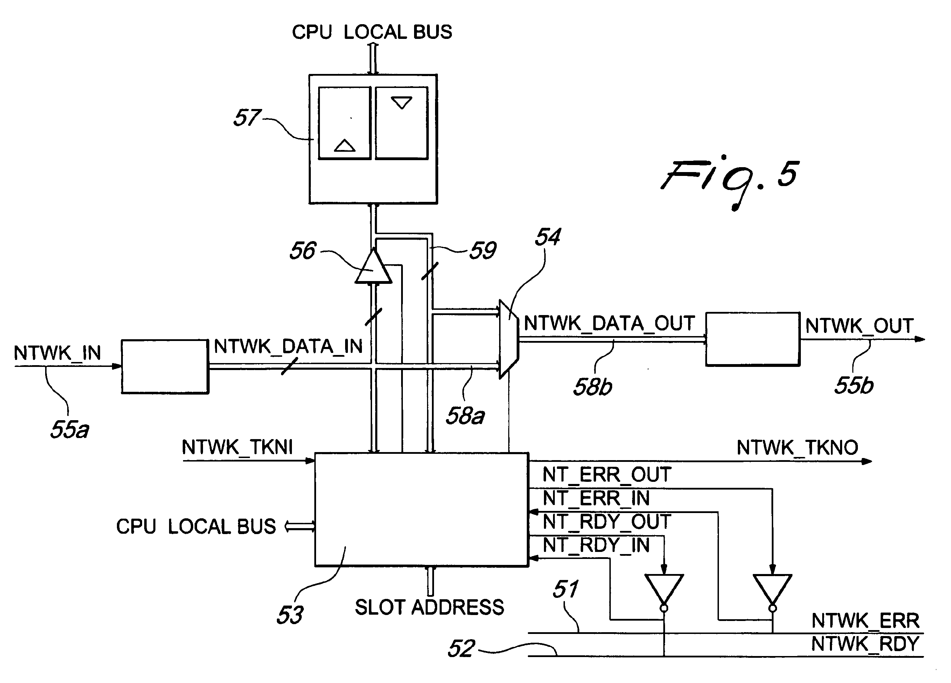

In order to access the configuration bus 15, each node 11 of the architecture according to a preferred embodiment of the invention comprises the elements shown schematically in Figure 5.

The input configuration bus 55a, which arrives from the preceding node, is connected to a series/parallel converter in order to convert the serial data packet that travels on the channel 55a into parallel data packets (preferably 32-bit packets) on the respective channel 58a. By means of the multiplexer 54, the data packet is forward-propagated (on 58b) and serialized (on 55b) and sent in input to the next node.

Locally, the node controller (designated by the reference numeral 53) is programmed to decode the data packet that arrives on the channel 58a and to check whether the packet is assigned to the computing node being considered. If so, the controller 53 itself transfers the data to the local CPU by means of a buffer 56 and a bidirectional FIFO memory 57.

If the node being considered must transmit over the control bus a data packet generated by the local CPU, once it has acquired a token (NTWK_TKNI) propagated by the preceding node (as described hereinafter), the node controller 53 configures the multiplexer 54 so as to forward-propagate the data packet stored by the local CPU in the bidirectional FIFO memory 57 (in doing so, it disables the buffer 56).

The control signals 51 and 52 are used to synchronize on the control bus the operations between the transmitter and the receiver(s), as shown in the following Table 1. These control signals are bidirectional and therefore each node controller can read them in addition to being able to determine their logic level.

Communications on the network configuration channel can be of the point-to-point type (i.e. between any two nodes of the system), of the multicast type (i.e. between one node and a subset of nodes) and of the broadcast type (i.e. between one and node and all the other nodes).

Preferably, communications on the channel are managed by using a logic of the token-ring type. This logic, typically used in LAN networks, is implemented by propagating a control used as a node-to-node token: the node that takes the token can send a data packet to one or more nodes present in the system.

Packet transmission occurs by sending initially a header that contains information regarding the recipient of the packet. The header is analyzed in hardware by all the nodes, as shown with reference to Figure 5. The recipient node, once it has received the header, declares that it is ready to receive the packet and the sender node accordingly sends the data.

Handshaking between the sender node and the recipient node is possible by using the two controls *(NTWK_ERR* and *NTWK_RDY*) that are common to all the nodes of the system, according to the logic given in the following Table 1:

**Table 1**

| **NTWK_RDY** | **NTWK_ERR** | |
|---|---|---|
| 0 | 0 | condition forced by the sender following the expiry of a timeout caused by the fact that no node has recognized itself as recipient |
| 0 | 1 | the recipient has recognized itself and declares that it is ready to receive the packet |
| 1 | 0 | the recipient has recognized itself and declares that it is not ready to receive the packet |
| 1 | 1 | the recipient declares that it has received the entire packet successfully |

In the case of a multicast or broadcast communication, the sender node propagates the header. At the expiry of a preset time interval, the node controller of the sender node checks whether the NTWK_ERR control is not active. If so, the sender node propagates the rest of the packet, otherwise it waits for a second time interval.

At the expiry of the second time interval, the node controller enables the propagation on the configuration bus 15 of the rest of the packet regardless of the state of the control signal NTWK_ERR. In this second case, if the NTWK_ERR control is not active (i.e. is at a "high" level) when the second time interval expires, the controller of the sender node declares to the processing unit (CPU) that is associated with it that it has performed the transmission successfully; otherwise, it declares a communication error.

As the person skilled in the art can appreciate, in the case of a point-to-point communication it is possible to determine which node has had communications problems.

Going back to the implementation shown in Figure 4, the controllers of the node 13 are inserted in a hardware control network that carries signals for enabling the reception and/or transmission of data packets from or toward preset nodes via the output bus 25 and the input bus 24. The node controllers are set to monitor and change the state of these enable signals.

Each node controller comprises in input the following controls:
- V1_RRI (133), active when one of the successive nodes within the same function to which the current node belongs has decoded a header on the input bus 24 and is ready to receive the rest of the data packet;
- V1_TPI (131), active when one of the nodes of the function that follows the function to which the current node belongs has decoded a header on the input bus 24 and is ready to receive the rest of the packet;
- V2_BTI (135), active if the current node is enabled to use the output bus 25 to transmit any data packet to one or more nodes of the next function;
- V2_BTRI (137), token-in return.

The node controller 13 also comprises the following output controls:
• V1_RRO (134), used either to propagate to the successive node the corresponding signal V1_RRI or to signal that the current node has decoded a valid header on the input bus 24 and is ready to receive the rest of the packet;
• V1_TPO (132), used to propagate to the successive node corresponding input signal V1_TPI;
• V2_BTO (136), used to forward-propagate (i.e. propagate to the successive node of the same function) the signal V2_BTI;
• V2_BTRO (138), token-out return.

A logic of the token-ring type is implemented on the video bus locally between the nodes involved in a same function. Since a function can be configured dynamically using even a different number of nodes, in order to implement a token-ring logic the Bus-Token (BTI/BTO) and Bus-Token-Return (BTRI/BTRO) signals are used, as described hereinafter.

Within each node controller 13 there are appropriate switches that are adapted to route said controls, which can be activated during the network configuration step. In particular, depending on the state of the switching means, a node can be configured as a "head" node, as an "intermediate" node, or as a "terminal" node of the function.

In particular, the signals that are present on V2_BTRI of a head node are recirculated on V2_BTI of the same node. In a terminal node, the signals on V2_BTI are instead recirculated on V2_BTRO of the same node, while the signals on V1_RRI are switched on V1_TPO. Finally, in an intermediate node all the input controls are transferred to the respective output controls.

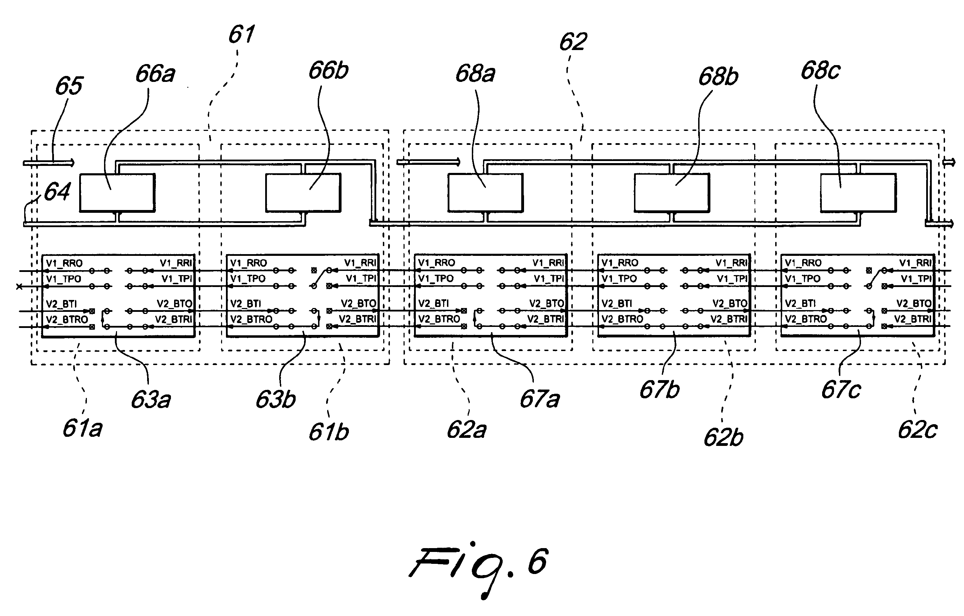

By way of example, with reference to the schematic diagram of Figure 6, a particular configuration of the architecture comprises five nodes 61a, 61b, 62a, 62b, 62c, which are grouped into two groups 61 and 62 so as to form two functions with two and three nodes respectively.

The nodes 61a, 61b, 62a, 62b and 62c comprise respective processing units 66a, 66b, 68a, 68b, 68c and respective node controllers 63a, 63b, 67a, 67b and 67c.

The input bus 64 and the output bus 65, which can be accessed by the processing units 66a, 66b, 68a, 68b, 68c, are configured by virtue of the switching means that are present in the nodes according to the invention. In particular, the nodes 61a and 61b are in parallel to each other and in series to the nodes 62a, 62b and 62c, which are in parallel to each other.

The head node and the terminal node of the function 61 are represented respectively by the nodes 61a and 61b, while the head node, the intermediate node and the terminal node of the function 62 correspond respectively to the nodes 62a, 62b and 62c.

The operation of the architecture according to the preferred embodiment of the invention is based on a logic of the data-driven type: each data packet comprises a label that defines it, known as header, so that only the node or nodes interested in the data contained in the packet can acquire said data from the input bus.

With reference to the particular configuration shown in Figure 6, when a data packet must be transmitted from the head node 61a of the function 61 to the intermediate node 62b of the function 62, the operation of the system is as follows.

Each individual function has its local token on the video bus, which is created in the possession of the head node during the function configuration step. When the token reaches a node, the corresponding control V2_BTI is activated. If the data packet to be sent is not yet ready when the sender node 61a receives the token, the token is propagated forward by means of the control V2_BTO.

V2_BTRI and V2_BTRO are two controls used as return of the local bus-token associated with the group of nodes configured to implement a function. For example, with reference to the function 62 shown in Figure 6, if a node is a head node within the function (node 67a), then it uses as a token, in order to be able to talk on the output video bus, the signal that is present on V2_BTRI and then forward-propagates the token on V2_BTO. If a node is an intermediate node within the function (node 67b), then it propagates, again on V2_BTRO, the signal that is present on V2_BTRI; if a node is a terminal node within the function (node 67c), then the token that it receives on V2_BTI propagates it on the corresponding V2_BTRO. In this manner, it is possible to configure locally a logic of the token-ring type.

Going back to the function 61 of Figure 6, as soon as the processing node 66a of the node 61a declares to the controller 63a that it has a data packet ready to be sent, the controller 63a assumes a state in which it waits for the token.

When the node 61a receives the token again, the value of the signal V1_TPI, which corresponds to the signal that is present on V1_RRO in output from the successive function 62 and propagated to all the nodes of the function 61, is checked. If the V1_TPI control is in the "not active" state, then all the nodes of the function 62 are ready to receive a header and accordingly the node 61a transmits on the output bus 65 the header of the data packet, entering a state in which it waits for activation of the signal V1_TPI.

When the node 62b has recognized that the header of the data packet is assigned to it, it declares that it is ready to receive the rest of the packet by activating the control V1_RRO and accordingly the control V1_TPI of the sender node 61a becomes "active".

In the case of multicast-type communications management, the control V1_RRO that the receiving node propagates is the result of a logical AND between the state of V1-RRO of said node and the state of V1_RRO of the successive node of the same function.

In any case, when data reception ends, the node 62b declares that it has received the entire packet, deactivating the control V1_RRO, and the node 61a releases the token.

It can be appreciated that differently from the network configuration channel described earlier, a node on the data channel can be affected simultaneously and independently by a data transmission toward the successive function and by a data reception from the preceding function.

For the network configuration channel and the data channel (for example video data), it is possible to select via software a token management policy that is different from the one described above. The policy described above in fact provides forward-propagation of the token if the node that receives it does not have to talk on the bus or if said node has just finished talking.

Alternative embodiments can manage the token differently, for example by retaining it in the sender node until the node has to send a data packet. This logic can be useful for example in the data channel, when it is necessary to forward-propagate the processed data packets in a preset order.

In another embodiment, the token is retained by the sender node until permission is given (via software) to release it. This management policy can be useful for example if it is necessary to send a message or data packet that is larger than the space available in the buffers of the sender node and it is therefore necessary to split it into multiple parts in order to transmit it in following steps.

It has thus been shown that the present invention achieves the intended aim and objects. In particular, it has been shown that the described architecture allows to define, and therefore functionally define, the distribution of computing power. The architecture allows a considerable increase in performance with respect to known architectures as the number of used computing nodes increases. Moreover, owing to the intrinsic modularity of the structure, the components of each node can be replaced with new or more recent components without affecting the structure of the system.

The person skilled in the art can also appreciate that the described architecture can interface with any existing system by inserting a node that implements a bridge toward any standard bus, such as for example PCI (Peripheral Component Interconnect), VME (Versa Module Europa), or LAN (Local Area Network).

The invention is susceptible of numerous modifications and variations, all of which are within the scope of the same inventive concept. For example, the type of control can be modified by using, instead of the described network bus 15, a standard bus such as VME, PCI or VITA4, maintaining the architecture of the processing and data communications portion.

It is also evident that the inventive concept on which the present invention is based is independent of the specific use of the illustrated components. Accordingly, the scope of the protection of the claims must not be limited by the illustrations or by the preferred embodiments given in the description by way of example, but rather the claims must comprise all the patentable novelty characteristics that reside within the present invention, including all the characteristics that would be treated as equivalents by the person skilled in the art.

## Claims

1. A system (10) for allocating data processing resources, comprising a plurality of consecutive nodes (11, 61a, 61b, 62a, 62b, 62c), each connected in input to an input data communications bus (14, 24, 64) and in output to an output data communications bus (15, 25, 65), each node (11, 61a, 61b, 62a, 62b, 62c) comprising:
- a data processing unit (12, 66a, 66b, 68a, 68b, 68c), for processing the data that are present on said input bus (14, 24, 64) and for sending processed data on said output bus (15, 25, 65);
- switching means (21, 22, 23, 42, 43, 46), for switching from a parallel state to a series state and vice versa the state of the connection between said node (11, 61a, 61b, 62a, 62b, 62c) and a successive node of said plurality of nodes via said input bus and said output bus, wherein:
in the parallel state, said node (11, 61a, 61b, 62a, 62b, 62c) and said successive node share the data present in said input bus (14, 24, 64);
in the series state, the output bus (15, 25, 65) is connected to the input bus (14, 24, 64) upstream of said successive node so that the data present on said output bus (15, 25, 65) and the data processed by said node (11, 61a, 61b, 62a, 62b, 62c) are present in input to said successive node,
the state of the switching means (21, 22, 23, 42, 43, 46) of said plurality of nodes defining consecutive functional groups, wherein each group comprises one of said nodes (11, 61a, 61b, 62a, 62b, 62c) or a plurality of said nodes connected in parallel to each other via the respective switching means (21, 22, 23, 42, 43, 46) in the parallel state, and wherein each group is connected to the successive group via one of said nodes (11, 61a, 61b, 62a, 62b, 62c) having its respective switching means (21, 22, 23, 42, 43, 46) in the series state;
**characterized in that** each node further comprises a node controller (13, 53, 63a, 63b, 67a, 67b, 67c), which is connected to said processing unit (12, 66a, 66b, 68a, 68b, 68c), the switching means being controlled by the node controller (13, 53, 63a, 63b, 67a, 67b, 67c),
and **in that** the system further comprises a network that connects said node controllers (13, 53, 63a, 63b, 67a, 67b, 67c) for controlling said input (14, 24, 64) and output (15, 25, 65) buses, said control network carrying signals for enabling reception and/or transmission of data packets from or toward preset nodes via said output (15, 25, 65) and input (14, 24, 64) buses, said node controllers (13, 53, 63a, 63b, 67a, 67b, 67c) being set to monitor and change the state of said enabling signals.

2. The system (10) according to claim 1, **characterized in that** it comprises a configuration network for connecting the node controllers (13, 53, 63a, 63b, 67a, 67b, 67c) of said plurality of nodes (11, 61a, 61b, 62a, 62b, 62c) according to a loop configuration, said configuration network being connected to a resource allocation unit (18) in order to define the state of the switching means of said plurality of nodes (11, 61a, 61b, 62a, 62b, 62c) via said configuration network and said node controllers (13, 53, 63a, 63b, 67a, 67b, 67c).

3. The system (10) according to claim 2, **characterized in that** said node controllers (13, 53, 63a, 63b, 67a, 67b, 67c) are set to communicate in said configuration network according to a token-ring logic.

4. The system (10) according to any of the preceding claims, **characterized in that** said processing unit (12, 66a, 66b, 68a, 68b, 68c) is set to monitor the data that are present on said input bus (14, 24, 64) and to acquire and process said data if they comprise a header that is specific for the node (11, 61a, 61b, 62a, 62b, 62c) that comprises said processing unit (12, 66a, 66b, 68a, 68b, 68c).

5. The system (10) according to claim 1 and 4, **characterized in that** the node controller (13, 53, 63a, 63b, 67a, 67b, 67c) is set so as to activate a signal for enabling the reception of data packets and to send it to said control network if the corresponding processing unit (12, 66a, 66b, 68a, 68b, 68c) contained in the node (11, 61a, 61b, 62a, 62b, 62c) detects the header that is specific for said node (11, 61a, 61b, 62a, 62b, 62c).

6. The system (10) according to any of claims 4-5, **characterized in that** the node controller (13, 53, 63a, 63b, 67a, 67b, 67c) comprises means for checking the activation state of said reception enabling signal that is present in said control network, said checking means being set so as to enable the processing unit (12, 66a, 66b, 68a, 68b, 68c) to transmit said data packets on the output bus (15, 25, 65) if said reception enabling signal is in the active state.

7. The system (10) according to any of the preceding claims, **characterized in that** said processing unit (12, 66a, 66b, 68a, 68b, 68c) comprises a digital video signal processor or DSP (27).

8. The system (10) according to any of the preceding claims, **characterized in that** said switching means comprise:
a first multiplexer (42), which has two inputs that are respectively connected to said input bus and to said output bus and has an output that is connected to said input bus, said first multiplexer (42) having a selection input (130a) that is connected to said node controller (13, 53, 63a, 63b, 67a, 67b, 67c) in order to select the input of the first multiplexer (42) to be carried to the output of the first multiplexer (42);
a second multiplexer (43), which has two inputs that are respectively connected to said output bus and to said processing unit and has an output that is connected to said output bus, said second multiplexer (43) having a selection input (130b) that is connected to said node controller (13, 53, 63a, 63b, 67a, 67b, 67c) in order to select the input of the second multiplexer to be carried to the output of the second multiplexer (43).

9. The system (10) according to any of the preceding claims, **characterized in that** it comprises an auxiliary bus (16) that is connected to all the nodes (11, 61a, 61b, 62a, 62b, 62c) of said plurality of nodes in order to acquire the processed data that is present on the output of any node (11, 61a, 61b, 62a, 62b, 62c).

10. Use of the system (10) according to any of the preceding claims in a circuit for processing signals acquired from a radar antenna connected to said input bus (14, 24, 64).

## Patentansprüche

1. System (10) zum Zuordnen von Datenverarbeitungsressourcen, das eine Vielzahl von aufeinanderfolgenden Knoten (11, 61a, 61b, 62a, 62b, 62c) umfasst, von denen jeder zum Eingeben mit einem Eingangsdatenkommunikationsbus (14, 24, 64) und zum Ausgeben mit einem Ausgangsdatenkommunikationsbus (15, 25, 65) verbunden ist, wobei jeder Knoten (11, 61a, 61b, 62a, 62b, 62c) umfasst:
- eine Datenverarbeitungseinheit (12, 66a, 66b, 68a, 68b, 68c) zum Verarbelten der auf dem Eingangsbus (14, 24, 64) vorhandenen Daten und zum Senden von bearbeiteten Daten auf dem Ausgangsbus (15, 25, 65);
- Schaltmittel (21, 22, 23, 42, 43, 46) zum Schalten des Zustandes der Verbindung zwischen dem Knoten (11, 61a, 61b, 62a, 62b, 62c) und einem nachfolgenden Knoten aus der Vielzahl von Knoten, von einem parallelen Zustand zu einem seriellen Zustand und umgekehrt, über den Eingangsbus und den Ausgangsbus, wobei:
sich der Knoten (11, 61a, 61b, 62a, 62b, 62c) und der nachfolgende Knoten in dem parallelen Zustand die in dem Eingangsbus (14, 24, 64) vorhandenen Daten teilen;
der Ausgangsbus (15, 25, 65) In dem seriellen Zustand stromaufwärts des nachfolgenden Knotens mit dem Eingangsbus (14, 24, 64) verbunden ist, so dass die auf dem Ausgangsbus (15, 25, 65) vorhandenen Daten und die von dem Knoten (11, 61a, 61b, 62a, 62b, 62c) verarbeiteten Daten als Eingabe in den nachfolgenden Knoten vorhanden sind,
der Zustand der Schaltmittel (21, 22, 23, 42, 43, 46) der Vielzahl von Knoten aufeinanderfolgende funktionale Gruppen definiert, wobei jede Gruppe einen der Knoten (11, 61a, 61b, 62a, 62b, 62c) oder eine Vielzahl der Knoten, die parallel zueinander über die entsprechenden Schaltmittel (21, 22, 23, 42, 43, 46) in dem parallelen Zustand verbunden sind, umfasst und wobei jede Gruppe mit der nachfolgenden Gruppe über einen der Knoten (11, 61a, 61b, 62a, 62b, 62c), dessen entsprechende Schaltmittel (21, 22, 23, 42, 43, 46) Im seriellen Zustand sind, verbunden ist;
**dadurch gekennzeichnet, dass** jeder Knoten darüber hinaus eine Knotensteuerungseinheit (13, 53, 63a, 63b, 67a, 67b, 67c) aufweist, die mit der Vererbeitungseinheit (12, 66a, 66b, 68a, 68b, 68c) verbunden ist, wobei die Schaltmittel durch die Knotensteuerungseinheit (13, 53, 63a, 63b, 67a, 67b, 67c) gesteuert werden, und
dass das System darüber hinaus ein Netzwerk aufweist, das die Knotensteuerungseinheiten (13, 53, 63a, 63b, 67a, 67b, 67c) zur Steuerung der Eingangs- (14, 24, 64) und Ausgangsbusse (15, 25, 65) verbindet, wobei das Steuerungsnetzwerk Signale zum Ermöglichen eines Empfangs und/oder eines Übertragens von Datenpaketen von oder zu voreingestellten Knoten über die Ausgangs- (15, 25, 65) und Eingangsbusse (14, 24, 64) trägt, wobei die Knotensteuerungseinheiten (13, 53, 63a, 63b, 67a, 67b, 67c) zum Überwachen und Ändern des Zustands der Ermöglichungssignale eingestellt sind.

2. System (10) nach Anspruch 1, **dadurch gekennzeichnet, dass** es ein Konfigurationsnetzwerk zum Verbinden der Knotensteuerungseinheiten (13, 53, 63a, 63b, 67a, 67b, 67c) der Vielzahl von Knoten (11, 61a, 61b, 62a, 62b, 62c) gemäß einer Schleifenkonfiguration aufweist, wobei das Konfigurationsnetzwerk mit einer Ressourcenzuordnungseinheit (18) verbunden ist, um den Zustand der Schaltmittel der Vielzahl von Knoten (11, 61a, 61b, 62a, 62b, 62c) über das Konfigurationsnetzwerk und die Knotensteuerungseinheiten (13, 53, 63a, 63b, 67a, 67b, 67c) zu definierten.

3. System (10) nach Anspruch 2, **dadurch gekennzeichnet, dass** die Knotensteuerungseinheiten (13, 53, 63a, 63b, 67a, 67b, 67c) eingestellt sind, um gemäß einer Token-Ring-Logik in dem Konfigurationsnetzwerk zu kommunizieren.

4. System (10) nach einem der vorgehenden Ansprüche, **dadurch gekennzeichnet, dass** die Verarbeitungseinheit (12, 66a, 66b, 68a, 68b, 68c) eingestellt ist, um die auf dem Eingangsbus (14, 24, 64) vorhandenen Daten zu überwachen und um die Daten zu erfassen und zu verarbeiten, wenn sie einen Kopf aufweisen, der für den Knoten (11, 61a, 61b, 62a, 62b, 62c) spezifisch ist, welcher die Verarbeitungseinheit (12, 66a, 66b, 68a, 68b, 68c) aufweist.

5. System (10) nach den Ansprüchen 1 und 4, **dadurch gekennzeichnet, dass** die Knotensteuerungseinheit (13, 53, 63a, 63b, 67a, 67b, 67c) eingestellt ist, um ein Signal zum Ermöglichen des Empfangs von Datenpaketen zu aktivieren und um es an das Steuerungsnetzwerk zu senden, wenn die in dem Knoten (11, 61a, 61b, 62a, 62b, 62c) enthaltene entsprechende Verarbeitungseinheit (12, 66a, 66b, 68a, 68b, 68c) den für den Knoten (11, 61a, 61b, 62a, 62b, 62c) spezifischen Kopf detektiert.

6. System (10) nach einem der Ansprüche 4 bis 5, **dadurch gekennzeichnet, dass** die Knotensteuerungseinheit (13, 53, 63a, 63b, 67a, 67b, 67c) Mittel zum Prüfen des Aktivierungszustandes des in dem Steuerungsnetzwerk vorhandenen Empfangsermöglichungssignals aufweist, wobei die Prüfmittel eingestellt sind, um der Verarbeitungseinheit (12, 66a, 66b, 68a, 68b, 68c) zu ermöglichen, die Datenpakete auf dem Ausgangsbus (15, 25, 65) zu übertragen, wenn das Empfangsermöglichungssignal in dem aktiven Zustand ist.

7. System (10) nach einem der vorhergehenden Ansprüche, **dadurch gekennzeichnet, dass** die Verarbeitungseinheit (12, 66a, 66b, 68a, 68b, 68c) eine digitale Videosignalverarbeitungseinheit oder einen DSP (27) umfasst.

8. System (10) nach einem der vorhergehenden Ansprüche, **dadurch gekennzeichnet, dass** die Schaltmittel aufweise:
einen ersten Multiplexer (42), der zwei Eingänge, die jeweils mit dem Eingangsbus bzw. Ausgangsbus verbunden sind, und einen Ausgang aufweist, der mit dem Eingangsbus verbunden ist, wobei der erste Multiplexer (42) über einen Auswahleingang (130a) verfügt, der mit der Knotensteuerungseinheit (13, 53, 63a, 63b, 67a, 67b, 67c) verbunden ist, um die Eingabe des ersten Multiplexers (42) auszuwählen, die an den Ausgang des ersten Multiplexers (42) zu übertragen ist;
einen zweiten Multiplexer (43), der zwei Eingänge, die jeweils mit dem Ausgangsbus bzw. mit dem Prozessor verbunden sind, und einen Ausgang aufweist, der mit dem Ausgangsbus verbunden ist, wobei der zweite Multiplexer (43) über einen Auswahleingang (130b) verfügt, der mit der Knotensteuerungseinheit (13, 53, 63a, 63b, 67a, 67b, 67c) verbunden ist, um die Eingabe des zweiten Multiplexers auszuwählen, die an den Ausgang des zweiten Multiplexers (43) zu übertragen ist.

9. System (10) nach einem der vorhergehenden Ansprüche, **dadurch gekennzeichnet, dass** es über einen Hilfsbus (16) verfügt, der mit allen Knoten (11, 61a, 61b, 62a, 62b, 62c) der Vielzahl von Knoten verbunden ist, um die verarbeiteten Daten zu erfassen, die am Ausgang von einem Knoten (11, 61a, 61b, 62a, 62b, 62c) vorhanden sind.

10. Verwendung des Systems (10) nach einem der vorhergehenden Ansprüche in einer Schaltung zum Verarbeiten von Signalen, die von einer Radarantenne erfasst werden, die mit dem Eingangsbus (14, 24, 64) verbunden ist.

## Revendications

1. Système (10) pour allouer des ressources de traitement de données, comprenant une pluralité de noeuds consécutifs (11, 61a, 61b, 62a, 62b, 62c), chacun étant connecté en entrée à un bus de communication de données d'entrée (14, 24, 64) et en sortie à un bus de communication de données de sortie (15, 25, 65), chaque noeud (11, 61a, 61b, 62a, 62b, 62c) comprenant :
- une unité de traitement de données (12, 66a, 66b, 68a, 68b, 68c), pour traiter les données qui sont présentes sur ledit bus d'entrée (14, 24, 64) et pour transmettre les données traitées sur ledit bus de sortie (15, 25, 65) ;
- des moyens de commutation (21, 22, 23, 42, 43, 46), pour commuter d'un état parallèle vers un état série et vice versa l'état de la connexion entre ledit noeud (11, 61a, 61b, 62a, 62b, 62c) et un noeud successif de ladite pluralité de noeuds via ledit bus d'entrée et ledit bus de sortie, dans lequel :
dans l'état parallèle, ledit noeud (11, 61a, 61b, 62a, 62b, 62c) et ledit noeud successif partagent les données présentes dans ledit bus d'entrée (14, 24, 64) ;
dans l'état série, le bus de sortie (15, 25, 65) est connecté au bus d'entrée (14, 24, 64) en amont dudit noeud successif de sorte que les données présentes sur ledit bus de sortie (15, 25, 65) et les données traitées par ledit noeud (11, 61a, 61b, 62a, 62b, 62c) sont présentes en entrée dudit noeud successif,
l'état des moyens de commutation (21, 22, 23, 42, 43, 46) de ladite pluralité de noeuds définissant des groupes fonctionnels consécutifs, dans lesquels chaque groupe comprend un desdits noeuds (11, 61a, 61b, 62a, 62b, 62c) ou une pluralité desdits noeuds connectés en parallèle les uns avec les autres via les moyens de commutation respectifs (21, 22, 23, 42, 43, 46) dans l'état parallèle, et dans lequel chaque groupe est connecté au groupe successif via un desdits noeuds (11, 61a, 61b, 62a, 62b, 62c) ayant ses moyens de commutation respectifs (21, 22, 23, 42, 43, 46) dans l'état série ;
**caractérisé en ce que** chaque noeud comprend en outre une commande de noeud (13, 53, 63a, 63b, 67a, 67b, 67c), qui est connectée à ladite unité de traitement (12, 66a, 66b, 68a, 68b, 68c), les moyens de commutation étant pilotés par la commande de noeud (13, 53, 63a, 63b, 67a, 67b, 67c),
et **en ce que** le système comprend en outre un réseau qui connecte lesdites commandes de noeud (13, 53, 63a, 63b, 67a, 67b, 67c) pour piloter ledit bus d'entrée (14, 24, 64) et ledit bus de sortie (15, 25, 65), ledit réseau de commande transportant des signaux pour permettre la réception et/ou la transmission de paquets de données provenant de et se dirigeant vers des noeuds prédéfinis via lesdits bus d'entrée (15, 25, 65) et de sortie (14, 24, 64), lesdites commandes de noeud (13, 53, 63a, 63b, 67a, 67b, 67c) étant agencées pour suivre et modifier l'état desdits signaux de permission.

2. Système (10) selon la revendication 1, **caractérisé en ce qu'**il comprend un réseau de configuration pour connecter les commandes de noeud (13, 53, 63a, 63b, 67a, 67b, 67c) de ladite pluralité de noeuds (11, 61a, 61b, 62a, 62b, 62c) selon une configuration en boucle, ledit réseau de configuration étant connecté à une unité d'allocation de ressources (1B) de façon à définir l'état des moyens de commutation de ladite pluralité de noeuds (11, 61a, 61b, 62a, 62b, 62c) via ledit réseau de configuration et lesdites commandes de noeud (13, 53, 63a, 63b, 67a, 67b, 67c).

3. Système (10) selon la revendication 2, **caractérisé en ce que** lesdites commandes de noeud (13, 53, 63a, 63b, 67a, 67b, 67c) sont définies pour communiquer dans ledit réseau de configuration selon une logique en anneau à jeton.

4. Système (10) selon l'une quelconque des revendications précédentes, **caractérisé en ce que** ladite unité de traitement (12, 66a, 66b, 68a, 66b, 68c) est agencée pour suivre les données qui sont présentes sur ledit bus d'entrée (14, 24, 64) et pour acquérir et traiter lesdites données si elles comprennent une entête de section qui est spécifique pour le noeud (11, 61a, 61b, 62a, 62b, 62c) qui comprend ladite unité de traitement (12, 66a, 66b, 68a, 68b, 68c).

5. Système (10) selon les revendications 1 et 4, **caractérisé en ce que** la commande de noeud (13, 53, 63a, 63b, 67a, 67b, 67c) est agencée pour activer un signal pour permettre la réception de paquets de données et pour les envoyer audit réseau de commande si l'unité de traitement correspondante (12, 66a, 66b, 68a, 68b, 68c) contenue dans le noeud (11, 61a, 61b, 62a, 62b, 62c) détecte l'entête de section qui est spécifique pour ledit noeud (11, 61a, 61b, 62a, 62b, 62c).

6. Système (10) selon l'une quelconque des revendications 4 ou 5, **caractérisé en ce que** la commande de noeud (13, 53, 63a, 63b, 67a, 67b, 67c) comprend des moyens pour vérifier l'état d'activation dudit signal permettant la réception qui est présent dans ledit réseau de commande, lesdits moyens de vérification étant agencés de façon à permettre à l'unité de traitement (12, 66a, 66b, 68a, 68b, 68c) de transmettre lesdits paquets de données sur le bus de sortie (15, 25, 65) si ledit signal permettant la réception est dans l'état actif.

7. Système (10) selon l'une quelconque des revendications précédentes, **caractérisé en ce que** ladite unité de traitement (12, 66a, 66b, 68a, 68b, 68c) comprend un processeur de signal vidéo numérique ou DSP (27).

8. Système (10) selon l'une quelconque des revendications précédentes, **caractérisé en ce que** lesdits moyens de commutation comprennent :
- un premier multiplexeur (42), ayant deux entrées qui sont respectivement connectées audit bus d'entrée et audit bus de sortie et ayant une sortie qui est connectée audit bus d'entrée, ledit premier multiplexeur (42) ayant une entrée de sélection (130a) qui est connectée à ladite commande de noeud (13, 53, 63a, 63b, 67a, 67b, 67c) afin de sélectionner l'entrée dudit premier multiplexeur (42) devant être exportée vers la sortie du premier multiplexeur (42) ;
- un second multiplexeur (43), ayant deux entrées qui sont respectivement connectées audit bus de sortie et à ladite unité de traitement et ayant une sortie qui est connectée audit bus de sortie, ledit second multiplexeur (43) ayant une entrée de sélection (130b) qui est connectée à ladite commande de noeud (13, 53, 63a, 63b, 67a, 67b, 67c) de façon à sélectionner l'entrée du second multiplexeur devant être exportée vers la sortie du second multiplexeur (43) ;

9. Système (10) selon l'une quelconque des revendications précédentes, **caractérisé en ce qu'**il comprend un bus auxiliaire (16) qui est connecté à tous les noeuds (11, 61a, 61b, 62a, 62b, 62c) de ladite pluralité de noeuds pour faire l'acquisition des données traitées qui sont présentes sur la sortie de n'importe quel noeud (11, 61a, 61b, 62a, 62b, 62c).

10. Utilisation du système (10) selon l'une quelconque des revendications précédentes dans un circuit pour traiter des signaux acquis par une antenne radar connectée audit bus d'entrée (14, 24, 64).
